# EUROPÄISCHE PATENTANMELDUNG

(11) **EP 4 597 769 A1**
(43) Veröffentlichungstag der Anmeldung: **06.08.2025**
(21) Anmeldenummer: 24154909.6
(22) Anmeldetag: 31.01.2024
(51) Int. Cl.: H02G 3/08, H02G 3/10

(54) **ELEKTROINSTALLATIONSGERÄT ZUR AUFPUTZMONTAGE**

(71) Anmelder: GIRA Giersiepen GmbH & Co. KG, 42477 Radevormwald (DE)
(72) Erfinder: MAROVAC, Milan, 51647 Gummersbach (DE)
(74) Vertreter: Dr. Solf & Zapf Patent- und Rechtsanwalts PartG mbB

(57) **Zusammenfassung**

Die vorliegende Erfindung betrifft ein Elektroinstallationsgerät (1) zur Aufputzmontage, aufweisend ein Gehäuse (2), einen Funktionseinsatz (4) und eine, auf einer Lagerfläche anordenbare, Montageplatte (6). Die Montageplatte (6) weist eine in eine Montagerichtung (M) weisende Auflagefläche (8) zur Anlage an der Lagerfläche auf. Der Funktionseinsatz (4) und das Gehäuse (2) sind gegenüberliegend der Auflagefläche (8) an der Montageplatte (6) derart in Montagerichtung (M) weisend in einem montierten Zustand des Elektroinstallationsgeräts (1) montierbar, dass in dem montierten Zustand des Elektroinstallationsgeräts (1) das Gehäuse (2) den Funktionseinsatz (4) mit einer Gehäusewandung (12) senkrecht zur Montagerichtung (M) umgreift und das Gehäuse (2) und der Funktionseinsatz (4) gegen eine Bewegung entgegen der Montagerichtung (M) an der Montageplatte (6) arretiert sind. Die Montageplatte (6) weist zumindest einen gegen die Montagerichtung (M) hervorstehenden senkrecht zur Montagerichtung (M) elastischen Rastarm (16) auf, welcher sich in dem montierten Zustand des Elektroinstallationsgeräts (1) zwischen der Gehäusewandung (12) und dem Funktionseinsatz (4) erstreckt und mittels zumindest eines zum Funktionseinsatz (4) weisenden Funktionsrasthakens (18) den Funktionseinsatz (4) und mittels zumindest eines zur Gehäusewandung (12) weisenden Gehäuserasthakens (20) das Gehäuse (2) an der Montageplatte (6) arretiert.

## Beschreibung

Die Erfindung betrifft ein Elektroinstallationsgerät zur Aufputzmontage. Das Elektroinstallationsgerät weist ein Gehäuse, einen Funktionseinsatz und eine auf einer Lagerfläche anordenbare Montageplatte auf. Die Montageplatte weist weiterhin eine in eine Montagerichtung weisende Auflagefläche zur Anlage an der Lagerfläche auf. Der Funktionseinsatz und das Gehäuse sind gegenüberliegend der Auflagefläche an der Montageplatte in Montagerichtung weisend in einen montierten Zustand des Elektroinstallationsgeräts montierbar. Dabei ist vorgesehen, dass in dem montierten Zustand des Elektroinstallationsgeräts das Gehäuse den Funktionseinsatz mit einer Gehäusewandung senkrecht zur Montagerichtung umgreift. Weiterhin sind in dem montierten Zustand des Elektroinstallationsgeräts das Gehäuse und der Funktionseinsatz gegen eine Bewegung entgegen der Montagerichtung an der Montageplatte arretiert.

Zweckmäßig ist der Funktionseinsatz mit einem Netzwerk kontaktierbar. Es ist bekannt, dass es sich bei dem Netzwerk, mit welchem der Funktionseinsatz kontaktierbar ist, insbesondere um ein Stromnetz oder ein BUS-Netz handeln kann. So ist es bekannt, dass Elektroinstallationsgeräte für die Aufputzmontage als Schalter zur Steuerung von elektrischen Verbrauchern oder als Schutzkontaktsteckdosen ausgebildet sind. Auch sind Elektroinstallationsgeräte bekannt, deren Funktionselemente mit einem Kommunikationsnetzwerk, insbesondere einem LAN oder W-LAN, kontaktierbar sind, wobei der jeweilige Funktionseinsatz über entsprechende Kommunikationsmittel, Leiteranschluss, Funk-Schnittstelle, etc. verfügt.

Bei Elektroinstallationsgeräten für die Aufputzmontage ist es erwünscht, dass diese leicht, insbesondere ohne Werkzeug, montierbar sind und gleichzeitig hohe gegen die Montagerichtung weisende Abzugskräfte, beispielsweise Abzugskräfte von 200 Newton, abfangen müssen. Für Wartungs- und Reparaturzwecke ist es weiterhin wünschenswert, wenn die in den Elektroinstallationsgeräten verwendeten Funktionseinsätze leicht zugänglich sind, beispielsweise indem das Gehäuse leicht entfernbar ist.

Bei den aus dem Stand der Technik bekannten Elektroinstallationsgeräten für die Aufputzmontage hat es sich als nachteilig herausgestellt, dass bei einer Anordnung und Arretierung des Funktionseinsatzes und/oder des Gehäuses an der Montageplatte mittels einer Schraubverbindung ein hoher Bauraumbedarf vorliegt, so dass durch den Platzmangel bei einem als Schalter ausgebildeten Elektroinstallationsgerät eine Schraubverbindung äußerst umständlich zu realisieren ist. Auch ist eine Schraubverbindung hinsichtlich der Montage aufgrund von der Notwendigkeit von Werkzeug und der Gefahr eines Verlustes von Einzelteilen, insbesondere der Schrauben, nachteilig. Es ist zwar aus dem Stand der Technik bekannt, an den jeweiligen Bauteilen vormontierte Schrauben zu verwenden, um die Montage zu verbessern, jedoch ist auch hier zur Montage ein Werkzeug notwendig. Zudem erfordern Schraubverbindungen einen gehobenen Herstellungsaufwand.

Der Erfindung liegt die Aufgabe zugrunde, ein Elektroinstallationsgerät bereitzustellen, welches die aus dem Stand der Technik bekannten Nachteile überwindet, insbesondere einfach zu montieren ist, und wobei das Elektroinstallationsgerät sowohl als Schalter als auch als Anschlussdose ausgebildet sein kann.

Die Aufgabe wird erfindungsgemäß durch die Merkmale des Anspruchs 1 dadurch gelöst, dass die Montageplatte zumindest einen gegen die Montagerichtung hervorstehenden senkrecht zur Montagerichtung elastischen Rastarm aufweist, welcher sich in dem montierten Zustand des Elektroinstallationsgeräts zwischen der Gehäusewandung und dem Funktionseinsatz erstreckt und mittels zumindest eines zum Funktionseinsatz weisenden Funktionsrasthakens den Funktionseinsatz an der Montageplatte arretiert und mittels zumindest eines zur Gehäusewandung weisenden Gehäuserasthakens das Gehäuse an der Montageplatte arretiert.

Die erfindungsgemäße Ausführung hat die Wirkung, dass der zumindest eine derartig als doppelseitiger Rasthaken ausgebildete Rastarm mit dem Gehäuserasthaken und dem Funktionsrasthaken sowohl den Funktionseinsatz als auch das Gehäuse an der Montageplatte fixiert, so dass eine Anzahl an notwendigen Arretierungselementen geringgehalten wird. Zudem hat die Verwendung von Rasthaken den Vorteil, dass diese einstückig mit der Montageplatte ausgebildet sein können, so dass keine verlierbaren Bauteile, wie beispielsweise Schrauben, zur Arretierung des Funktionseinsatzes und/oder des Gehäuses notwendig sind. Gleichsam wird der Herstellungsaufwand durch die Möglichkeit einer einstückigen Fertigung der Montageplatte mit den Rastarmen und der Montageaufwand, insbesondere da keine Werkzeuge zur Montage notwendig sind, geringgehalten.

Weiterhin wird durch das erfindungsgemäße Konzept eine maximale Bewegung des Rastarms senkrecht zur Montagerichtung eingeschränkt und eine Haltekraft des Funktionseinsatzes an der Montageplatte als auch die des Gehäuses an der Montageplatte erhöht.

In einer vorteilhaften Ausführungsform der Erfindung weist die Montageplatte zumindest zwei der Rastarme auf. Insbesondere sind die Rastarme dabei um 180° um einen Umfang der Montageplatte versetzt angeordnet. Die zumindest zwei Rastarme erstrecken sich jeweils in dem montierten Zustand des Elektroinstallationsgeräts in einen Spalt zwischen der Gehäusewandung und dem Funktionseinsatz, so dass, wie zuvor beschrieben, der Funktionseinsatz und das Gehäuse an der Montageplatte arretierbar sind. Insbesondere kann auch vorgesehen sein, dass zwei Rastarme auf einer Seite der Montageplatte zweckmäßig nebeneinander angeordnet sind und auf einer gegenüberliegenden Seite der Montageplatte das Gehäuse und der Funktionseinsatz mittels einer Hakenverbindung an der Montageplatte eingehängt werden können.

Eine vorteilhafte Ausführung sieht vor, dass der Funktionseinsatz für jeden Rastarm eine gegen die Montagerichtung weisende Funktionsrastfläche aufweist. Das Elektroinstallationsgerät ist dabei zweckmäßig derart ausgebildet, dass auf der Funktionsrastfläche in dem montierten Zustand des Elektroinstallationsgeräts jeweils eine korrespondierend in die Montagerichtung weisend ausgebildete Funktionsgegenrastfläche des Funktionsrasthakens aufliegt, vorteilhaft, dass die Funktionsrastfläche von dem Funktionsrasthaken hintergriffen ist.

Vorzugsweise weist das Gehäuse in analoger Weise für jeden Rastarm eine gegen die Montagerichtung weisende Gehäuserastfläche auf. Diese ist insbesondere derart ausgebildet, dass in dem montierten Zustand des Elektroinstallationsgeräts jeweils eine korrespondierend in die Montagerichtung weisend ausgebildete Gehäusegegenrastfläche des Gehäuserasthakens derart auf der Gehäuserastfläche aufliegt, dass die Gehäuserastfläche von dem Gehäuserasthaken hintergriffen ist.

Der durch die Funktionsrastfläche und die Funktionsgegenrastfläche bzw. der Gehäuserastfläche und der Gehäusegegenrastfläche erzeugte Formschluss hat zur Folge, dass vorteilhaft hohe Abzugskräfte, beispielsweise 200 Newton, bereitgestellt werden können.

Insbesondere kann vorgesehen sein, dass die Funktionsgegenrastfläche(n) derart ausgebildet ist/sind, dass sie in die Montagerichtung weisend mit ihrem jeweiligen Rastarm einen Winkel von mindestens 90°, insbesondere größer als 90°, einschließen. Alternativ oder ergänzend kann/können auch die Gehäusegegenrastfläche(n) derart ausgebildet sein, dass sie in die Montagerichtung weisend mit ihrem jeweiligen Rastarm einen Winkel von mindestens 90°, insbesondere größer als 90°, einschließen. Insbesondere kann der jeweilige Winkel in Abhängigkeit von den bereitzustellenden Abzugskräften ausgewählt werden. Durch einen Winkel von 90° wird zweckmäßig verhindert, dass sich der Funktionsrasthaken bzw. der Gehäuserasthaken an dem Funktionseinsatz bzw. an dem Gehäuse verkeilt, so dass ein Trennen des Gehäuses und/oder des Funktionseinsatzes von der Montageplatte durch eine elastische Verformung des Rastarms erleichtert ist. Ein Winkel von größer als 90° hat zudem die Wirkung, dass bei einer Einwirkung einer Abzugskraft gegen die Montagerichtung gleichzeitig eine Kraftkomponente den Rastarm elastisch verformt, so dass die Abzugskräfte vorteilhaft über die Winkel angepasst werden können.

Es kann auch vorgesehen sein, dass zumindest die Gehäusegegenrastfläche(n) derart ausgebildet ist/sind, dass sie in die Montagerichtung weisend mit ihrem jeweiligen Rastarm einen Winkel von kleiner als 90° einschließen. Insbesondere kann die korrespondierende Gehäuserastfläche dabei einen Hinterschnitt aufweisen, so dass in einem montierten Zustand des Elektroinstallationsgeräts eine elastische Verformung des jeweiligen Rastarm erschwert wird.

Gemäß einer weiteren bevorzugten Ausführung ist der zumindest eine Rastarm derart ausgebildet, dass in dem montierten Zustand des Elektroinstallationsgeräts der Rastarm mit einem Anlageabschnitt an der Gehäusewandung des Gehäuses anliegt. Durch die Anlage des Rastarms mit seinem Anlageabschnitt an der Gehäusewandung übernimmt das Gehäuse selbst eine Blockierfunktion gegen eine Verformung des Rastarms in Richtung des Gehäuses. Insbesondere wird durch die Blockierfunktion des Gehäuses der Halt des gegenüberliegenden Funktionsrasthakens an dem Funktionseinsatz gesichert und einem ungewollten Lösen des Funktionseinsatzes von der Montageplatte vorgebeugt.

Es hat sich als besonders vorteilhaft für eine Demontierbarkeit des Elektroinstallationsgeräts herausgestellt, dass vorzugsweise auf der zum Funktionseinsatz weisenden Seite zwischen dem Rastarm und dem Funktionseinsatz ein Spalt ausgebildet ist, welcher über eine Erstreckung des Rastarm in Montagerichtung verläuft. Dabei ist zweckmäßig vorgesehen, dass eine senkrecht zur Montagerichtung gemessene Breite des Spalts mindestens einer senkrecht zu der Montagerichtung gemessenen Breite einer Überschneidungsfläche zwischen der Gehäuserastfläche und der Gehäusegegenrastfläche entspricht.

Vorteilhaft liegt in dem montierten Zustand des Elektroinstallationsgeräts der Rastarm mit seinem Anlageabschnitt an der Gehäusewandung an, so dass eine Verformung des Rastarms nach außen unterbunden ist. Zum Lösen des Gehäuses und des Funktionseinsatzes von der Montageplatte kann der Rastarm nach innen zum Funktionseinsatz hin elastisch verformt werden. Aufgrund der vorteilhaften Bemaßung des Spalts und der Überschneidungsfläche der Gehäuserastfläche und der Gehäusegegenrastfläche wird bei einer maximalen elastischen Verformung des Rastarms zum Funktionseinsatz weisend, der Rastarm liegt in diesem Zustand an dem Funktionseinsatz an und schließt den Spalt, die Rastverbindung des Gehäuserasthaken freigegeben, so dass das Gehäuse gegen die Montagerichtung weisend von der Montageplatte gelöst werden kann. Durch die Trennung des Gehäuses von der Montageplatte ist zweckmäßig eine elastische Verformung des Rastarms in die von dem Funktionseinsatz abweisende Richtung möglich, so dass die Rastverbindung des Funktionsrasthakens ebenfalls gelöst und der Funktionseinsatz gegen die Montagerichtung weisend auch von der Montageplatte getrennt werden kann.

Gemäß einer vorteilhaften Variante des Elektroinstallationsgeräts weist der Funktionsrasthaken des zumindest einen Rastarms eine in die Montagerichtung weisend zum Funktionseinsatz ansteigende erste Montageschräge auf. Vorzugsweise geht dabei die erste Montageschräge in die Funktionsgegenrastfläche über bzw. die Funktionsgegenrastfläche schließt sich in die Montagerichtung weisend der ersten Montageschräge an. Alternativ oder ergänzend kann eine derartige zweite Montageschräge auch an dem Gehäuserasthaken ausgebildet sein. Vorteilhaft weist dabei der Gehäuserasthaken des zumindest einen Rastarms die in die Montagerichtung weisend zum Gehäuse ansteigende zweite Montageschräge auf. Auch bei der zweiten Montageschräge kann vorteilhaft vorgesehen sein, dass die zweite Montageschräge in die Gehäusegegenrastfläche übergeht bzw. die Gehäusegegenrastfläche sich in die Montagerichtung weisend der zweiten Montageschräge anschließt. Insbesondere verbessern die erste und zweite Montageschräge die Montage des Gehäuses bzw. des Funktionseinsatzes an der Montageplatte. Zweckmäßig wird bei der Montage durch das Gehäuse bzw. durch den Funktionseinsatz eine in Montagerichtung weisende Montagekraft auf die erste bzw. zweite Montageschräge ausgeübt, wobei durch die Schräge eine elastische Verformung des jeweiligen Rastarms begünstigt wird.

In einer bevorzugten Variante ist die Gehäusegegenrastfläche des Gehäuserasthakens des zumindest einen Rastarms durch einen Freischnitt in dem jeweiligen Rastarm ausgebildet. Dieser Freischnitt ist dabei zur Gehäusewandung weisend geöffnet. Insbesondere ist die jeweilige Gehäuserastfläche korrespondierend zu dem Freischnitt derart an einem zum jeweiligen Rastarm weisenden Vorsprung ausgebildet, dass sich der Vorsprung in dem montierten Zustand des Elektroinstallationsgerätes zumindest teilweise, insbesondere vollständig, in den Freischnitt erstreckt. Insbesondere kann durch den Freischnitt ein elastisches Verhalten des Rastarms und der Anlageabschnitt des Rastarms zur Anlage an der Gehäusewandung eingestellt werden. Weiterhin kann durch den Freischnitt der notwendige Bauraum zum Bereitstellen einer Rastverbindung zwischen dem Gehäuserasthaken und dem Gehäuse geringgehalten werden.

Vorteilhaft sind der jeweilige Gehäuserasthaken und der jeweilige Freischnitt derart ausgebildet, dass eine zu der Gehäusewandung weisende maximale Erstreckung des Gehäuserasthakens kleiner oder gleich groß ist wie eine in Montagerichtung vor dem Gehäuserasthaken ausgebildete maximale zu der Gehäusewandung weisende Erstreckung des Rastarm. Insbesondere ermöglicht diese Variante, dass die Rastfunktion des Gehäuserasthakens eines geringen Bauraums bedarf.

Zumindest für Anwendungszwecke, aber auch für Reparatur-, Anpassungs- und Wartungszwecke hat es sich bevorzugt herausgestellt, dass das Gehäuse zumindest eine in Montagerichtung weisend geöffnete Funktionsöffnung aufweist, durch welche hindurch der Funktionseinsatz in dem montierten Zustand des Elektroinstallationsgeräts von außen zugänglich ist. Zweckmäßig kann dadurch abhängig von der Art des Funktionseinsatzes von außen auf den Funktionseinsatz eingewirkt oder eine Verbindung mit dem Funktionseinsatz hergestellt werden. Auch ermöglicht die Funktionsöffnung eine individuelle, insbesondere designorientierte, Anpassung eines optischen Erscheinungsbildes des Elektroinstallationsgerätes.

Vorzugsweise weist/weisen die Funktionsöffnung(en) einen umlaufenden radial nach innen vorstehenden Kragen auf. Es kann auch vorgesehen sein, dass, wenn mehrere Funktionsöffnungen ausgebildet sind, beispielsweise vier durch Stege getrennte Funktionsöffnungen, diese Funktionsöffnungen einen gemeinsamen umlaufenden Kragen aufweisen, welcher alle Funktionsöffnungen umschließt.

Vorteilhaft weist der Kragen zumindest eine Durchgriffsöffnung auf, wobei die Durchgriffsöffnung(en) in dem montierten Zustand des Elektroinstallationsgeräts in Montagerichtung weisend fluchtend zu dem/den Rastarm(en) angeordnet ist/sind. Insbesondere kann durch die jeweilige Durchgriffsöffnung ein Lösewerkzeug in das Gehäuse eingeführt und in Eingriff mit dem jeweiligen Rastarm zur elastischen Verformung desselbigen gebracht werden. Zweckmäßig wird dadurch eine vorteilhafte Ausführung zu Trennung des Gehäuses und des Funktionseinsatzes von der Montageplatte bereitgestellt. Insbesondere kann/können die Durchgriffsöffnung(en) im Kragen senkrecht zur Montagerichtung nach innen zur Funktionsöffnung weisend geöffnet ausgebildet sein.

Gemäß einer vorteilhaften Ausführung sind die Rastarme und die Durchgriffsöffnungen derart ausgebildet, dass zur Trennung des Gehäuses und des Funktionseinsatzes von der Montageplatte das Lösewerkzeug lediglich in Montagerichtung weisend durch die Durchgriffsöffnung(en) eingeführt werden muss und insbesondere kein Hebeln mit dem Lösewerkzeug erforderlich ist, sondern die reine Verschiebung des Lösewerkzeugs in die Montagerichtung weisend ausreicht, um die Rastarme derart elastisch zu verformen, dass die jeweilige Rastverbindung gelöst wird.

Bei der vorgenannten Ausführung kann vorteilhaft vorgesehen sein, dass der Kragen derart viele Durchgriffsöffnungen aufweist wie die Montageplatte Rastarme aufweist, so dass insbesondere in dem montierten Zustand des Elektroinstallationsgeräts jeweils eine Durchgriffsöffnung fluchtend zu jeweils einem der Rastarme angeordnet ist. Zweckmäßig können dadurch die Rastverbindungen der jeweiligen Rastarme bzw. der jeweiligen Rasthaken in vorteilhafter Weise gelöst werden.

Vorzugsweise weist der zumindest eine Rastarm gegen die Montagerichtung weisend eine Demontagelasche auf. Die Demontagelaschen dienen zweckmäßig als ein Angriffshebel, insbesondere für ein Lösewerkzeug, zur elastischen Verformung der Rastarme. Vorzugsweise schließen sich den Demontagelaschen in die Montagerichtung weisend den Funktionsrasthaken und den Gehäuserasthaken an. Vorteilhaft ist dadurch die Demontagelasche in Montagerichtung weisend leicht zugänglich, so dass insbesondere ein durch eine Durchgriffsöffnung geführtes Lösewerkzeug die Demontagelasche leicht kontaktieren kann.

Vorzugsweise kann vorgesehen sein, dass die Demontagelasche, insbesondere alle Montagelaschen, derart ausgebildet und fluchtend zu der Durchgriffsöffnung, insbesondere fluchtet jeweils eine Durchgriffsöffnung mit jeweils einer Demontagelasche, angeordnet ist, dass, wenn das Lösewerkzeug in die Montagerichtung weisend durch die Durchgriffsöffnung in das Gehäuse eingeführt wird, das Lösewerkzeug in einen Eingriff mit der Demontagelasche gelangt. Vorzugsweise ist die Demontagelasche und/oder das Lösewerkzeug dabei derart ausgebildet, dass eine in die Montagerichtung gerichtete Verschiebung des Lösewerkzeugs die senkrecht zur Montagerichtung weisende elastische Verformung der Rastarme hervorruft. Dadurch können die Rastverbindungen der jeweiligen Rastarme bzw. der jeweiligen Rasthaken in vorteilhafter Weise gelöst werden bzw. eine vorteilhafte Trennung des Gehäuses und des Funktionseinsatzes von der Montageplatte ermöglicht werden.

Zweckmäßig kann vorgesehen sein, dass als Lösewerkzeug ein Schraubendreher verwendet werden kann bzw. dass das Lösewerkzeug als ein Schraubendreher ausgebildet ist.

In einer besonders vorteilhaften Ausführung weist die Montageplatte zwei Rastarme auf, welche jeweils mit einer Durchgriffsöffnung im Kragen in Montagerichtung weisend fluchtend ausgebildet bzw. angeordnet sind. Gemäß einer vorteilhaften Ausführung sind die Rastarme und die Durchgriffsöffnungen derart ausgebildet, dass zur Trennung des Gehäuses und des Funktionseinsatzes von der Montageplatte das Lösewerkzeug lediglich in Montagerichtung weisend zunächst durch eine der Durchgriffsöffnungen und danach durch die jeweils andere Durchgriffsöffnung eingeführt werden muss. Vorzugsweise sind die Rastarme, insbesondere die Demontagelaschen, derart ausgebildet und angeordnet, dass kein Hebeln mit dem Lösewerkzeug erforderlich ist, sondern die reine Verschiebung des Lösewerkzeugs in die Montagerichtung weisend ausreicht, um die Rastarme derart elastisch zu verformen, dass die jeweilige Rastverbindung gelöst wird.

In einer besonderen Ausführung ist der Funktionseinsatz vorteilhaft als ein Schaltereinsatz zur Steuerung bzw. zum Schalten eines elektrischen Verbrauchers ausgebildet ist. Insbesondere ist dabei in dem montierten Zustand des Elektroinstallationsgeräts der Schaltereinsatz durch die Funktionsöffnung(en) des Gehäuses hindurch betätigbar.

Zweckmäßig ist in der/den Funktionsöffnung(en) zumindest ein Bedieneinsatz anordenbar. Vorzugsweise ist/sind in dem montierten Zustand des Elektroinstallationsgeräts die Funktionsöffnung(en) mittels des Bedieneinsatzes verschlossen. Der Bedieneinsatz ist vorzugsweise mit dem Schaltereinsatz derart verbindbar, dass durch eine Einwirkung auf den Bedieneinsatz der Schaltereinsatz zur Steuerung bzw. zum Schalten des elektrischen Verbrauchers betätigbar ist. Insbesondere kann der Bedieneinsatz als ein Taster oder eine Schaltwippe ausgebildet sein.

Es können vorteilhaft als Schalter ausgebildete Funktionseinsätze vorgesehen sein, welche zur Steuerung bzw. zum Schalten eines elektrischen Verbrauchers unabhängig von einer Funktionsöffnung betätigbar sind. Insbesondere sind derartige Funktionseinsätze mittels Sensoren, z. B. eines Temperatursensors oder eines Näherungssensors oder mittels Funksignale, beispielsweise Nahfunksignale, in unterschiedliche Schaltzustände überführbar.

Auch kann vorgesehen sein, dass der Funktionseinsatz vorteilhaft als ein durch die Funktionsöffnung(en) des Gehäuses kontaktierbarer Anschlusseinsatz ausgebildet ist. Beispielsweise kann es sich dabei um einen Stromanschluss, insbesondere eine Schutzkontaktsteckdose zur Verbindung mit einem korrespondierenden Schutzkontaktstecker, handeln. Auch kann der Anschlusseinsatz als ein Datenanschluss, vorzugsweise ein Universal Serial Bus (USB)-Stecker, oder als ein Netzwerkanschluss, beispielsweise für eine RJ-Verbindung, ausgebildet sein.

Insbesondere um die Funktionssicherheit zu erhöhen, kann es vorteilhaft vorgesehen sein, dass in der/den Funktionsöffnung(en) zumindest ein Schutzeinsatz anordenbar ist. Es kann dabei vorgesehen sein, dass in dem montierten Zustand des Elektroinstallationsgeräts die Funktionsöffnung(en) mittels des Schutzeinsatzes verschlossen ist/sind. Insbesondere weist dabei der Schutzeinsatz zumindest eine in die Montagerichtung weisend ausgebildete Anschlussöffnung zur Kontaktierung des Anschlusseinsatzes auf. Exemplarisch weist ein Schutzeinsatz für ein als Steckdose ausgebildetes Elektroinstallationsgerät zwei Anschlussöffnungen zur Einführung der Kontaktstifte des korrespondierenden männlichen Schutzkontaktsteckers und zwei Anschlussöffnungen zur Durchführung der Schutzkontakte auf.

Weitere vorteilhafte Ausgestaltungen der Erfindung ergeben sich aus der folgenden Figurenbeschreibung und den abhängigen Unteransprüchen.

Es zeigen:
- Fig. 1: eine Explosionsansicht eines Elektroinstallationsgeräts mit einem zugehörigen Lösewerkzeug,
- Fig. 2: eine Schnittansicht eines auf einer Montageplatte montierten Funktionseinsatzes,
- Fig. 3: eine Schnittansicht des Bereichs A gemäß Fig. 2 eines Elektroinstallationsgeräts in einem montierten Zustand,
- Fig. 4: eine perspektivische Ansicht des Elektroinstallationsgeräts während eines Trennvorgangs eines Gehäuses von der Montageplatte mit dem zugehörigen Lösewerkzeug und
- Fig. 5: eine Schnittansicht des Elektroinstallationsgeräts gemäß Fig. 4 während des Trennvorgangs des Gehäuses von der Montageplatte mit dem zugehörigen Lösewerkzeug.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

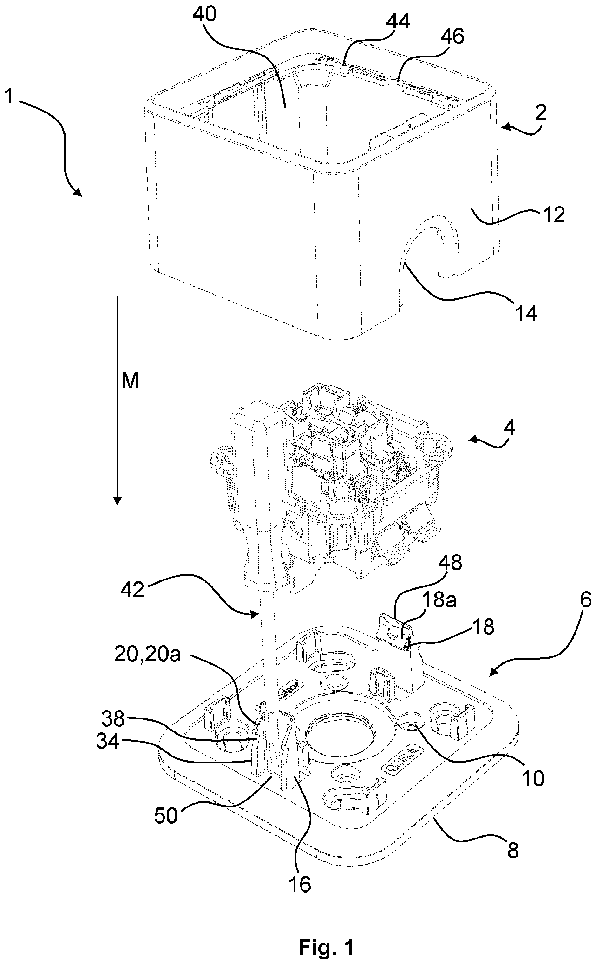

In Fig. 1 ist ein Elektroinstallationsgerät 1 zur Aufputzmontage dargestellt. Das Elektroinstallationsgerät 1 weist dabei ein Gehäuse 2, einen Funktionseinsatz 4 und eine auf einer Lagerfläche anordenbare Montageplatte 6 auf. Zweckmäßig ist der Funktionseinsatz 4 mit einem Netzwerk kontaktierbar, wobei das Netzwerk und die Lagerfläche nicht dargestellt sind. Insbesondere kann es sich bei der Lagerfläche um eine Wand eines Gebäudes handeln.

Die Montageplatte 6 weist eine in eine Montagerichtung M weisende Auflagefläche 8 zur Anlage an der Lagerfläche auf. Zweckmäßig kann die Montageplatte 6 auf der Lagerfläche durch eine Verschraubung arretiert werden. Insbesondere weist die in Fig. 1 dargestellte Montageplatte 6 vier parallel in die Montagerichtung M weisende Schraubenlöcher 10 zur Verschraubung der Montageplatte 6 an der Lagerfläche auf.

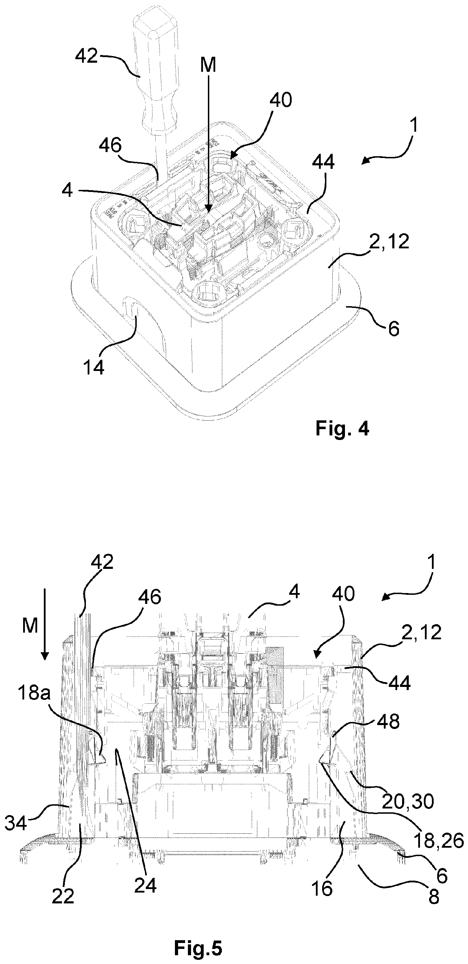

Der Funktionseinsatz 4 und das Gehäuse 2 sind, wie insbesondere aus den Fig. 1 und 4 hervorgeht, gegenüberliegend der Auflagefläche 8 an der Montageplatte 6 in die Montagerichtung M weisend in einem montierten Zustand des Elektroinstallationsgeräts 1 montierbar. Der montierte Zustand des Elektroinstallationsgeräts 1 liegt vor, wenn zumindest das Gehäuse 2 und der Funktionseinsatz 4 an der Montageplatte 6 montiert sind.

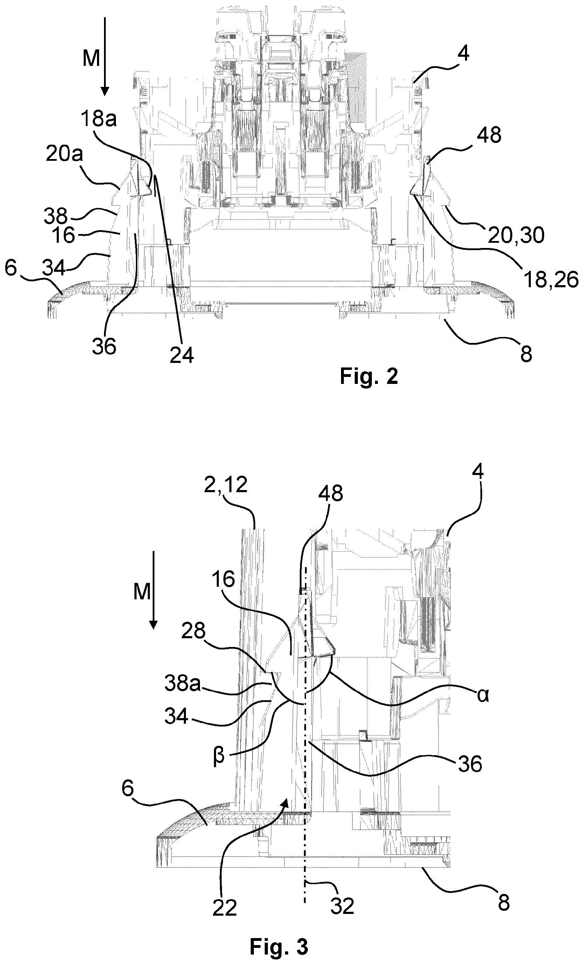

Der Funktionseinsatz 4 und das Gehäuse 2 sind dabei derart an der Montageplatte 6 montierbar, dass in dem montierten Zustand des Elektroinstallationsgeräts 1 das Gehäuse 2 den Funktionseinsatz 4 mit einer Gehäusewandung 12 senkrecht zur Montagerichtung M umgreift. Insbesondere in den Fig. 3 bis 4 ist dargestellt, wie der Funktionseinsatz 4 innerhalb des Gehäuses 2 angeordnet bzw. von dem Gehäuse 2 umgriffen ist.

Wie in Fig. 1 dargestellt, kann die Gehäusewandung 12 des Gehäuses 2 vorteilhaft eine senkrecht zur Montagerichtung M ausgebildete Kontaktöffnung 14 aufweisen, durch welche hindurch eine Netzwerkleitung zur Kontaktierung des Funktionseinsatzes 4 führbar ist.

In dem montierten Zustand des Elektroinstallationsgeräts 1 sind das Gehäuse 2 und der Funktionseinsatz 4 gegen eine Bewegung entgegen der Montagerichtung M an der Montageplatte 6 arretiert. Insbesondere ist die Arretierung des Gehäuses 2 und des Funktionseinsatzes 4 in Fig. 3 dargestellt.

Zur Arretierung des Gehäuses 2 und des Funktionseinsatzes 4 ist erfindungsgemäß vorgesehen, dass die Montageplatte 6, wie in Fig. 1 dargestellt, zumindest einen gegen die Montagerichtung M hervorstehenden, senkrecht zur Montagerichtung M elastischen Rastarm 16 aufweist. Der zumindest eine Rastarm 16 ist erfindungsgemäß derart ausgebildet, dass er sich in dem montierten Zustand des Elektroinstallationsgeräts 1, wie in Fig. 3 dargestellt, zwischen der Gehäusewandung 12 und dem Funktionseinsatz 4 erstreckt. Dabei arretiert der zumindest eine Rastarm 16 mittels zumindest eines zum Funktionseinsatz 4 weisenden Funktionsrasthakens 18 den Funktionseinsatz 4 an der Montageplatte 6 und mittels zumindest eines zur Gehäusewandung 12 weisenden Gehäuserasthakens 20 das Gehäuse 2 an der Montageplatte 6.

Fig. 1 zeigt weiterhin eine vorteilhafte Ausführung des Elektroinstallationsgeräts 1, gemäß welcher die Montageplatte 6 vorteilhaft zumindest zwei der Rastarme 16 aufweist. Diese Rastarme 16 sind bevorzugt um 180° um einen Umfang der Montageplatte 6 angeordnet. Insbesondere weist die Montageplatte 6 in die Montagerichtung M betrachtet ein rechteckiges Profil auf. Besonders vorteilhaft sind die zumindest zwei Rastarme 16 dabei auf gegenüberliegenden Seiten der Montageplatte 6 gespiegelt angeordnet. Vorteilhaft ist der zumindest eine Rastarm 16, insbesondere alle Rastarme 16, jeweils mittig zwischen zwei Ecken der Montageplatte 6 auf einer die Ecken verbindenden Seite der Montageplatte 6 angeordnet.

Vorteilhaft sind die zumindest zwei Rastarme 16, vorzugsweise alle Rastarme 16, derart ausgebildet, dass sich die Rastarme 16 jeweils in dem montierten Zustand des Elektroinstallationsgeräts 1 in einen Spalt 22 zwischen der Gehäusewandung 12 und dem Funktionseinsatz 4 zur Arretierung des Funktionseinsatzes 4 und des Gehäuses 2 erstrecken.

Eine vorteilhafte Arretierung des Funktionseinsatzes 4 wird dadurch erreicht, dass, wie in den Fig. 2 und 3 dargestellt, der Funktionseinsatz 4 gemäß einer bevorzugten Ausführung für jeden Rastarm 16 eine gegen die Montagerichtung M weisende Funktionsrastfläche 24 aufweist. Vorteilhaft liegt in dem montierten Zustand des Elektroinstallationsgeräts 1, dargestellt in Fig. 3, jeweils eine korrespondierend in die Montagerichtung M weisend ausgebildete Funktionsgegenrastfläche 26 des Funktionsrasthakens 18 auf der Funktionsrastfläche 24 des Funktionseinsatzes 4 auf. Vorteilhaft ist dabei die Funktionsrastfläche 24 von dem Funktionsrasthaken 18 hintergriffen.

Weiterhin ist in Fig. 3 eine vorteilhafte Arretierung des Gehäuses 2 dargestellt, gemäß welcher das Gehäuse 2 für jeden Rastarm 16 eine gegen die Montagerichtung M weisende Gehäuserastfläche 28 aufweist. Auf dieser Gehäuserastfläche 28 liegt vorzugsweise in dem montierten Zustand des Elektroinstallationsgeräts 1 jeweils eine korrespondierend in die Montagerichtung M weisend ausgebildete Gehäusegegenrastfläche 30 des Gehäuserasthakens 20 auf. Dabei ist vorzugsweise vorzusehen, dass die Gehäuserastfläche 28 von dem Gehäuserasthaken 20 hintergriffen ist.

Insbesondere ist/sind die Funktionsgegenrastfläche(n) 26 des/der Funktionsrasthaken(s) 18 derart ausgebildet, dass sie in die Montagerichtung M weisend mit ihrem jeweiligen Rastarm 16 einen Winkel α von mindestens 90°, insbesondere größer als 90°, einschließen. Alternativ oder ergänzend kann vorgesehen sein, dass die Gehäusegegenrastfläche(n) 30 des/der jeweiligen Gehäuserasthaken(s) 20 derart ausgebildet ist/sind, dass die jeweilige Gehäusegegenrastfläche 30 in die Montagerichtung M weisend mit ihrem jeweiligen Rastarm 16 einen Winkel β von mindestens 90°, insbesondere größer als 90°, einschließt. Mittels dieser Winkelbemaßung der jeweiligen Gehäusegegenrastfläche 30 bzw. Funktionsgegenrastfläche 26 zu ihren jeweiligen Rastarmen 16 sind vorteilhaft aufzubringende Abzugskräfte einstellbar. Insbesondere in den Fig. 2 und 3 ist dargestellt, dass die dargestellte Funktionsgegenrastfläche 26 derart ausgebildet ist, dass sie in die Montagerichtung M weisend mit ihrem jeweiligen Rastarm 16 einen Winkel α von größer als 90° einschließt. Zur Winkelbemaßung wird zwischen der Gehäusegegenrastfläche 30 und dem Rastarm 16 bzw. der Funktionsgegenrastfläche 26 und dem Rastarm 16 eine gedachte Referenzgerade 32 des jeweiligen Rastarms 16, wie in Fig. 2 dargestellt, herangezogen, wobei die vorgenannten Winkelbemaßungen den Winkel zwischen der Gehäusegegenrastfläche 30 und der Referenzgeraden
32 des jeweiligen Rastarms 16 bzw. der Funktionsgegenrastfläche 26 und der Referenzgeraden 32 des jeweiligen Rastarms 16 beschreibt. Die Referenzgerade 32 verläuft dabei senkrecht zur Auflagefläche 8 der Montageplatte 6 bzw. in Montagerichtung M.

Vorteilhaft kann die Arretierung des Gehäuses 2 an der Montageplatte 6 dadurch zusätzlich gesichert werden, dass die Gehäusegegenrastfläche(n) 30 derart ausgebildet ist/sind, dass sie in die Montagerichtung M weisend mit ihrem jeweiligen Rastarm 16 einen Winkel β von kleiner als 90° einschließen. Zur Bestimmung des Winkels β wird zweckmäßig die vorgenannte Referenzgerade 32 des jeweiligen Rastarms 16 herangezogen. Durch den sich durch diese Ausführung bildenden Hinterschnitt wird vorteilhaft in einem Montagezustand des Elektroinstallationsgeräts 1 einer ungewollten elastischen Verformung des Rastarms 16, bei einer auf das Gehäuse 2 gegen die Montagerichtung M weisenden Abzugskraft, was zu einem Trennen des Gehäuses 2 von der Montageplatte 6 führen könnte, vorgebeugt.

Ein besonderer Synergieeffekt wird durch eine vorteilhafte Ausführung dadurch erreicht, dass der zumindest eine Rastarm 16 derart ausgebildet ist, dass in dem montierten Zustand des Elektroinstallationsgeräts 1 der Rastarm 16 mit einem Anlageabschnitt 34 an der Gehäusewandung 12 des Gehäuses 2 anliegt. Dieser Zustand ist insbesondere in Fig. 3 dargestellt. Insbesondere ist auf der zum Funktionseinsatz 4 weisenden Seite zwischen dem Rastarm 16 und dem Funktionseinsatz 4 ein Spalt 36 über eine Erstreckung des Rastarms 16 in Montagerichtung M weisend verlaufend ausgebildet. Für ein besonders vorteilhaftes Demontageverhalten entspricht dabei vorzugsweise eine senkrecht zur Montagerichtung M gemessene Breite des Spalts 36 mindestens einer senkrecht zu der Montagerichtung M gemessenen Breite einer Überschneidungsfläche zwischen der Gehäuserastfläche 28 und der Gehäusegegenrastfläche 30.

Durch die Anlage des Rastarms 16 mit seinem Anlageabschnitt 34 an der Gehäusewandung 12 übernimmt das Gehäuse 2 selbst eine Blockierfunktion gegen eine elastische Verformung des Rastarms 16 in Richtung des Gehäuses 2. Insbesondere wird durch die Blockierfunktion des Gehäuses 2 der Halt des gegenüberliegenden Funktionsrasthakens 18 an dem Funktionseinsatz 4 gesichert und einem ungewollten Lösen des Funktionseinsatzes 4 von der Montageplatte 6 vorgebeugt.

Zum Lösen des Gehäuses 2 und des Funktionseinsatzes 4 von der Montageplatte 6 kann der Rastarm 16 senkrecht zu der Montagerichtung M nach innen zum Funktionseinsatz 4 hin elastisch verformt werden. Dieser Vorgang ist in einer vorteilhaften Variante unter Verwendung eines Lösewerkzeugs in den Fig. 4 und 5 dargestellt. Aufgrund der vorteilhaften Bemaßung des Spalts 36 und der Überschneidungsfläche der Gehäuserastfläche 28 und der Gehäusegegenrastfläche 30 wird bei einer maximalen elastischen Verformung des Rastarms 16 zum Funktionseinsatz 4 weisend, der Rastarm 16 liegt in diesem Zustand an dem Funktionseinsatz 4 an und schließt den Spalt 36, die Rastverbindung des Gehäuserasthakens 20 freigegeben, so dass das Gehäuse 2 gegen die Montagerichtung M weisend von der Montageplatte 6 gelöst werden kann. Durch die Trennung des Gehäuses 2 von der Montageplatte 6 ist zweckmäßig eine elastische Verformung des Rastarm 16 in die von dem Funktionseinsatz 4 abweisende Richtung möglich, so dass die Rastverbindung des Funktionsrasthakens 18 ebenfalls durch eine elastische Verformung des Rastarms 16 gelöst und der Funktionseinsatz 4 gegen die Montagerichtung M weisend auch von der Montageplatte 6 getrennt werden kann.

Wie in den Fig. 1 bis 3 und 5 dargestellt, weist der Funktionsrasthaken 18 des zumindest einen Rastarms 16 vorzugsweise eine in die Montagerichtung M weisend zum Funktionseinsatz 4 ansteigende erste Montageschräge 18a auf. Zweckmäßig schließt sich der ersten Montageschräge 18a die Funktionsgegenrastfläche 26 an, so dass insbesondere die erste Montageschräge 18a in die Funktionsgegenrastfläche 26 übergeht. Alternativ oder ergänzend weist, wie in den Fig. 1 bis 3 und 5 dargestellt, der Gehäuserasthaken 20 des zumindest einen Rastarms 16 eine in die Montagerichtung M weisend zum Gehäuse 2 ansteigende zweite Montageschräge 20a auf. Analog zur vorgenannten Ausführung schließt sich vorzugsweise der ersten Montageschräge 18a die Funktionsgegenrastfläche 26 an, so dass die zweite Montageschräge 20a in die Gehäusegegenrastfläche 30 übergeht. Die Montageschrägen 18a, 20a erleichtern insbesondere die Montage, da durch das Einwirken des Gehäuses 2 bzw. des Funktionseinsatzes 4 auf die jeweiligen Montageschrägen 18a, 20a der jeweilige Rastarm 16 elastisch senkrecht zur Montagerichtung M verformt wird. Insbesondere können durch diese Ausführung der Funktionseinsatz 4 und das Gehäuse 2 durch eine Verschiebung in die Montagerichtung M an der Montageplatte 6 angeordnet werden, ohne dass aktiv auf die Rastarme 16 eingewirkt werden muss.

Besonders bevorzugt ist gemäß einer vorteilhaften Ausführung, wie in den Fig. 2 und 3 dargestellt, die Gehäusegegenrastfläche 30 der Gehäuserasthaken 20 des zumindest einen Rastarms 16 durch einen Freischnitt 38 senkrecht zur Montagerichtung M in dem jeweiligen Rastarm 16 ausgebildet. Dieser Freischnitt 38 ist zweckmäßig zur Gehäusewandung 12 weisend geöffnet. Insbesondere ist die jeweilige Gehäuserastfläche 28 bzw. die jeweilige Gehäusewandung 12, an welcher die Gehäuserastfläche 28 ausgebildet ist, korrespondierend zu dem Freischnitt 38 ausgebildet, so dass diese zumindest teilweise in den Freischnitt 38 hineinragt, insbesondere an dem Rastarm 16 im Bereich des Freischnitts 38 anliegt. Zweckmäßig ist dafür die jeweilige Gehäuserastfläche 28 an einem zum jeweiligen Rastarm 16 weisenden Vorsprung 38a ausgebildet, wobei sich der Vorsprung 38a vorteilhat in dem montierten Zustand des Elektroinstallationsgeräts 1 zumindest teilweise, insbesondere vollständig, in den Freischnitt 38 erstreckt. Ergänzend kann der Vorsprung 38a eine an den Freischnitt 38 angepasste Kontur aufweisen. Wie in Fig. 3 dargestellt, ist der Freischnitt 38 beispielsweise keilförmig, sich gegen die Montagerichtung M senkrecht zur Montagerichtung M verbreiternd ausgebildet, wobei der Vorsprung 38a eine an die Keilform angepasste ebenfalls keilförmige Kontur senkrecht zur Montagerichtung M aufweist.

Zweckmäßig kann der Vorsprung 38a auch unabhängig von dem Freischnitt 38 des jeweiligen Rastarms 16 an der jeweiligen Gehäusewandung 12 vorgesehen sein. Insbesondere die keilförmige Kontur des Vorsprungs 38a verbessert dabei das Montageverhalten des Rastarms 16, insbesondere die senkrecht zur Montagerichtung M weisende elastische Verformung des Rastarms 16, so dass bei einer Rückverformung des Rastarms 16 der Gehäuserasthaken 20 mit seiner Gehäusegegenrastfläche 30 in einen überschneidenden Zustand mit der Gehäuserastfläche 28 überführt wird. Ein besonders vorteilhaftes Montageverhalten stellt sich zudem ein, wenn, wie in Fig. 3 dargestellt, die Montageschräge 20a des Gehäuserasthakens 20 korrespondierend zu dem Vorsprung 38a ausgebildet ist.

Der Gehäuserasthaken 20 und der Freischnitt 38 können vorteilhaft derart ausgeführt werden, dass, wie in Fig. 3 dargestellt, eine zu der Gehäusewandung 12 weisende maximale Erstreckung des Gehäuserasthakens 20 kleiner oder gleich groß ist wie eine in Montagerichtung M vor dem Gehäuserasthaken 20 ausgebildete maximale zu der Gehäusewandung 12 weisende Erstreckung des Rastarms 16. Insbesondere ermöglicht diese Variante einen kompakten Aufbau unter Wahrung einer ausreichenden Steifigkeit des Rastarms 16 senkrecht zur Montagerichtung M weisend.

Gemäß einer vorteilhaften Ausführung weist zumindest der eine Rastarm 16 auf seiner zum Gehäuse 2 weisenden Seite in Montagerichtung M verlaufende Nut 50 auf. Die Nut 50 ist insbesondere in Fig. 1 dargestellt. Vorteilhaft ist die Nut 50 gegen die Montagerichtung M sowie zum Gehäuse 2 weisend geöffnet ausgebildet. Weiterhin endet die Nut 50 zweckmäßig in die Montagerichtung M weisend an der Montageplatte 6. Vorzugsweise verläuft die Nut 50, wie dargestellt, vollständig über die in Montagerichtung M verlaufende Erstreckung des Rastarms 16. Durch die Nut 50 wird vorteilhaft Material am Rastarm 16 gespart. Auch kann die Elastizität des Rastarms 16 mittels der Nut 50 eingestellt werden.

Insbesondere kann vorgesehen sein, dass die Nut 50 in die Montagerichtung M weisend durch den Gehäuserasthaken 20 hindurch verläuft. Zweckmäßig weist der Rastarm 16 bzw. der Gehäuserasthaken 20 dadurch, wie exemplarisch in Fig. 1 dargestellt, zwei Gehäusegegenrastflächen 30, insbesondere auch zwei zweite Montageschrägen 20a und vorzugsweise auch zwei Anlageabschnitte 34 und besonders bevorzugt zwei Freischnitte 38, auf.

Das Gehäuse 2 gemäß der vorteilhaften Ausführung des Elektroinstallationsgeräts 1, welche in Fig. 1 dargestellt ist, weist vorzugsweise zumindest eine in Montagerichtung M geöffnete Funktionsöffnung 40 auf. Diese Funktionsöffnung(en) 40 ist/sind bevorzugt derart angeordnet, dass in dem montierten Zustand des Elektroinstallationsgeräts 1 durch die Funktionsöffnung(en) 40 hindurch zumindest auf den einen Rastarm 16 zur elastischen Verformung, insbesondere mit einem Lösewerkzeug 42, eingewirkt werden kann. Exemplarisch ist in den Fig. 4 und 5 dargestellt, wie ein Lösewerkzeug 42, zweckmäßig ein als Schraubendreher ausgebildetes Lösewerkzeug 42, durch die Funktionsöffnung 40 geführt wird und auf den Rastarm 16 einwirkt.

Gemäß einer vorteilhaften Ausführung ist der zumindest eine Rastarm 16 derart ausgebildet, dass zur Trennung des Gehäuses 2 und des Funktionseinsatzes 4 von der Montageplatte 6 das Lösewerkzeug 42 lediglich in Montagerichtung M weisend in Eingriff mit dem Rastarm 16 gebracht werden muss und insbesondere kein Hebeln mit dem Lösewerkzeug 42 erforderlich ist, sondern die reine Verschiebung des Lösewerkzeugs 42 in die Montagerichtung M weisend ausreicht, um den Rastarm 16 derart elastisch zu verformen, dass die jeweilige Rastverbindung gelöst wird.

Vorzugsweise weist/weisen die Funktionsöffnung(en) 40 einen umlaufenden radial nach innen vorstehenden Kragen 44 auf. Die Funktionsöffnung 40, welche den Kragen 44 aufweist, ist beispielsweise in den Fig. 1 und 4 dargestellt. Der Kragen 44 weist dabei vorzugsweise zumindest eine Durchgriffsöffnung 46 auf, wobei die Durchgriffsöffnung(en) 46 in dem montierten Zustand des Elektroinstallationsgeräts 1 in Montagerichtung M weisend fluchtend zu dem/den Rastarm(en) 16 angeordnet ist/sind. Die Durchgriffsöffnungen 46 ermöglichen vorteilhaft, auf die Rastarme 16 zu deren senkrecht zur Montagerichtung M weisenden elastischen Verformung einzuwirken. Insbesondere weist der Kragen 44 daher vorzugsweise derart viele Durchgriffsöffnungen 46 auf, wie die Montageplatte 6 Rastarme 16 aufweist, wobei zweckmäßig in dem montierten Zustand des Elektroinstallationsgeräts 1 jeweils eine Durchgriffsöffnung 46 fluchtend zu jeweils einem der Rastarme 16 angeordnet ist. Insbesondere weist die Montageplatte 6 gemäß den in den Fig. 1 und 4 dargestellten Ausführungsbeispielen zwei Rastarme 16 auf. Vorteilhaft ist insbesondere in Fig. 4 und 5 dargestellt, dass die Funktionsöffnung 40 zwei korrespondierende Durchgriffsöffnungen 46 aufweist, welche derart in Montagerichtung M weisend mit den Rastarmen 16 fluchten, dass insbesondere ein Lösewerkzeug 42 vorteilhaft die jeweiligen Rastarme 16 kontaktieren/verformen kann, zweckmäßig dargestellt in Fig. 5. Gemäß einer vorteilhaften Ausführung sind die zwei Rastarme 16 und die Durchgriffsöffnungen 46 derart ausgebildet, dass zur Trennung des Gehäuses 2 und des Funktionseinsatzes 4 von der Montageplatte 6 das Lösewerkzeug 42 lediglich in Montagerichtung M weisend zunächst durch eine der Durchgriffsöffnungen 46 und danach durch die jeweils andere Durchgriffsöffnung 46 eingeführt werden muss. Vorzugsweise sind die Rastarme 16 derart ausgebildet und angeordnet, dass die reine Verschiebung des Lösewerkzeugs 42 in die Montagerichtung M weisend ausreicht, um die Rastarme 16 derart elastisch zu verformen, dass die jeweilige Rastverbindung gelöst wird.

Insbesondere können/kann die Durchgriffsöffnungen 46 im Kragen 44 senkrecht zur Montagerichtung M nach innen zur Funktionsöffnung 40 weisend geöffnet sein, so dass leichter der Zugang ins Innere des Gehäuses 2 möglich ist.

Insbesondere weist der zumindest eine Rastarm 16 gegen die Montagerichtung M weisend eine Demontagelasche 48 auf. Die Demontagelasche 48 erleichtert es, zweckmäßig auf den jeweiligen Rastarm 16 einzuwirken und diesen elastisch senkrecht zur Montagerichtung M zu verformen. Vorzugsweise schließen sich in die Montagerichtung M weisend an die Demontagelasche 48 der Funktionsrasthaken 18 und der Gehäuserasthaken 20 an, so dass die Demontagelasche 48 in Montagerichtung M weisend, insbesondere durch die Funktionsöffnung 40 bzw. die Durchgriffsöffnung 46 hindurch, leicht kontaktierbar ist.

Insbesondere ist der Kragen 44 besonders vorteilhaft um eine Verblendung oder einen Bedieneinsatz oder einen Schutzeinsatz an dem Gehäuse 2 anzuordnen, wobei die Verblendung, der Bedieneinsatz oder der Schutzeinsatz auf dem Kragen 44 in Montagerichtung M weisend aufliegen. Insbesondere dient die Blende, der Bedieneinsatz oder der Schutzeinsatz dazu, den Funktionseinsatz 4 zu schützen und/oder das optische und/oder haptische Erscheinungsbild des Elektroinstallationsgeräts 1 anzupassen/aufzuwerten.

Insbesondere ist durch die Funktionsöffnung(en) 40 hindurch der Funktionseinsatz 4 in dem montierten Zustand des Elektroinstallationsgeräts 1 von außen zugänglich. Insbesondere bei einem als Anschlusseinsatz oder einem als Schaltereinsatz ausgebildeten Funktionseinsatz 4 kann somit auf den jeweiligen Funktionseinsatz 4 eingewirkt bzw. ein Anschluss hergestellt werden.

Vorteilhaft ist der als Schaltereinsatz ausgebildete Funktionseinsatz 4, wie in Fig. 1 dargestellt, zur Steuerung bzw. zum Schalten eines, nicht dargestellten, elektrischen Verbrauchers ausgebildet. Vorzugsweise ist dabei der Schaltereinsatz in dem montierten Zustand des Elektroinstallationsgeräts 1 durch die Funktionsöffnung(en) 40 des Gehäuses 2 hindurch betätigbar.

Zur Betätigung des Schaltereinsatzes hat es sich dabei als besonders vorteilhaft herausgestellt, dass der Bedieneinsatz in der/den Funktionsöffnung 40(en) anordenbar ist, zweckmäßig ist der Bedieneinsatz auf dem/den Kragen 44 der Funktionsöffnung(en) 40 gelagert. Insbesondere ist vorgesehen, dass in dem montierten Zustand des Elektroinstallationsgeräts 1 die Funktionsöffnung(en) 40 mittels des Bedieneinsatzes verschlossen ist/sind. Der Bedieneinsatz ist dabei zweckmäßig derart mit dem Schaltereinsatz verbindbar, dass durch eine Einwirkung auf den Bedieneinsatz der Schaltereinsatz zur Steuerung bzw. zum Schalten des elektrischen Verbrauchers betätigbar ist.

Alternativ zu dem als Schaltereinsatz ausgebildeten Funktionseinsatz 4 ist der als Anschlusseinsatz ausgebildete Funktionseinsatz 4, gemäß einer nicht dargestellten Ausführung, durch die Funktionsöffnung(en) 40 des Gehäuses 2 kontaktierbar. Insbesondere ist der Anschlusseinsatz als ein Stromanschluss, vorzugsweise für einen Schutzkontaktstecker, ausgebildet. Alternativ oder ergänzend ist der Anschlusseinsatz insbesondere als einen Datenanschluss, vorzugsweise für einen Universal Serial Bus (USB)-Stecker, ausgebildet.

Zum Schutz des Funktionseinsatzes 4 ist der Schutzeinsatz vorzugsweise in der/den Funktionsöffnung(en) 40 anordenbar. Vorzugsweise liegt der Schutzeinsatz auf der/den Kragen 44 der Funktionsöffnung(en) 40 auf. Insbesondere ist/sind in dem montierten Zustand des Elektroinstallationsgeräts 1 die Funktionsöffnung(en) 40 mittels des Schutzeinsatzes verschlossen, wobei zweckmäßig der Schutzeinsatz zumindest in Montagerichtung M weisend ausgebildete Anschlussöffnung zur Kontaktierung des Anschlusseinsatzes aufweist.

Der Montagevorgang sieht es insbesondere vor, dass in einem ersten Schritt der Funktionseinsatz 4 in die Montagerichtung M weisend derart an die Montageplatte 6 geführt wird, dass der Funktionsrasthaken 18 des zumindest einen Rastarms 16 der Montageplatte 6, wie in Fig. 2 dargestellt, an dem Funktionseinsatz 4 einrastet. Die Rastarme 16 werden bei der Montage des Funktionseinsatzes 4 senkrecht zur Montagerichtung M nach außen weisend elastisch verformt, wobei durch eine Rückverformung der Rastarme 16 der Funktionseinsatz 4 an der Montageplatte 6 arretiert wird.

Daraufhin wird, wie in Fig. 4 dargestellt, das Gehäuse 2 in die Montagerichtung M weisend an die Montageplatte 6 derart herangeführt, dass der Gehäuserasthaken 20 des zumindest einen Rastarms 16 der Montageplatte 6 an dem Gehäuse 2 einrastet. Insbesondere ist dafür vorgesehen, dass der Spalt 36 zwischen den Rastarmen 16 und dem Funktionseinsatz 4 ausgebildet ist, so dass sich die Rastarme 16, insbesondere in Folge einer in Montagerichtung M weisenden Einsteckkraft von dem Gehäuse 2, senkrecht zur Montagerichtung M nach innen weisend elastisch verformen können. Durch eine Rückverformung der Rastarme 16 wird das Gehäuse 2 an der Montageplatte 6 arretiert. Insbesondere liegt in diesem Zustand der Rastarm 16 senkrecht zur Montagerichtung M nach außen weisend an der Gehäusewandung 12 an. Durch dieses Konzept wird die Bewegung des jeweiligen Rastarms 16 eingeschränkt und die Haltekraft des Funktionseinsatzes 4 und des Gehäuses 2 an der Montageplatte 6 erhöht. Das Gehäuse 2 übernimmt in diesem Falle eine Blockierfunktion, welche ein Lösen des Funktionseinsatzes 4 vor einem Lösen des Gehäuses 2 von der Montageplatte 6 verhindert.

Zum Lösen wird, wie in den Fig. 4 und 5 dargestellt, vorzugsweise ein Lösewerkzeug 42 in den Eingriff mit dem zumindest einen Rastarm 16 gebracht. Vorteilhaft wird das Lösewerkzeug 42 durch die Durchgriffsöffnung 46 eingeführt und beaufschlagt eine Demontagelasche 48 mit einer senkrecht zur Montagerichtung M nach innen weisenden Kraft, so dass der jeweilige Rastarm 16 in den Spalt 36 zwischen dem Funktionseinsatz 4 und dem Rastarm 16 gedrängt wird. In Folge dessen wird vorteilhaft die Arretierung des Gehäuserasthakens 20 des Rastarms 16 mit dem Gehäuse 2 gelöst, so dass das Gehäuse 2 gegen die Montagerichtung M weisend von der Montageplatte 6 getrennt werden kann.

Nachdem das Gehäuse 2 von der Montageplatte 6 getrennt wurde, kann der jeweilige Rastarm 16, zweckmäßig ebenfalls mit dem Lösewerkzeug 42, senkrecht zur Montagerichtung M weisend nach außen elastisch verformt werden, wodurch die Arretierung des Funktionsrasthakens 18 des Rastarms 16 mit dem Funktionseinsatz 4 gelöst wird, wodurch der Funktionseinsatz 4 wiederum von der Montageplatte 6 gegen die Montagerichtung M getrennt werden kann.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Elektroinstallationsgerät
- 2: Gehäuse
- 4: Funktionseinsatz
- 6: Montageplatte
- 8: Auflagefläche
- 10: Schraubenlöcher
- 12: Gehäusewandung
- 14: Kontaktöffnung
- 16: Rastarm
- 18: Funktionsrasthaken
- 18a: Montageschräge des Funktionsrasthakens
- 20: Gehäuserasthaken
- 20a: Montageschräge des Gehäuserasthaken
- 22: Spalt zwischen Funktionseinsatz und Gehäuse
- 24: Funktionsrastfläche
- 26: Funktionsgegenrastfläche
- 28: Gehäuserastfläche
- 30: Gehäusegegenrastfläche
- 32: Referenzgerade
- 34: Anlageabschnitt
- 36: Spalt zwischen Rastarm und Funktionseinsatz
- 38: Freischnitt
- 38a: Vorsprung
- 40: Funktionsöffnung
- 42: Lösewerkzeug
- 44: Kragen
- 46: Durchgriffsöffnung
- 48: Demontagelasche
- 50: Nut
- M: Montagerichtung
- α: Winkel zwischen Funktionsgegenrastfläche und Rastarm
- β: Winkel zwischen Gehäusegegenrastfläche und Rastarm

## Patentansprüche

1. Elektroinstallationsgerät (1) zur Aufputzmontage, aufweisend ein Gehäuse (2), einen Funktionseinsatz (4) und eine, auf einer Lagerfläche anordenbare, Montageplatte (6), wobei die Montageplatte (6) eine in eine Montagerichtung (M) weisende Auflagefläche (8) zur Anlage an der Lagerfläche aufweist, wobei der Funktionseinsatz (4) und das Gehäuse (2) gegenüberliegend der Auflagefläche (8) an der Montageplatte (6) derart in Montagerichtung (M) weisend in einem montierten Zustand des Elektroinstallationsgeräts (1) montierbar sind, dass in dem montierten Zustand des Elektroinstallationsgeräts (1) das Gehäuse (2) den Funktionseinsatz (4) mit einer Gehäusewandung (12) senkrecht zur Montagerichtung (M) umgreift und das Gehäuse (2) und der Funktionseinsatz (4) gegen eine Bewegung entgegen der Montagerichtung (M) an der Montageplatte (6) arretiert sind,
**dadurch gekennzeichnet, dass**
die Montageplatte (6) zumindest einen gegen die Montagerichtung (M) hervorstehenden senkrecht zur Montagerichtung (M) elastischen Rastarm (16) aufweist, welcher sich in dem montierten Zustand des Elektroinstallationsgeräts (1) zwischen der Gehäusewandung (12) und dem Funktionseinsatz (4) erstreckt und mittels zumindest eines zum Funktionseinsatz (4) weisenden Funktionsrasthakens (18) den Funktionseinsatz (4) an der Montageplatte (6) arretiert und mittels zumindest eines zur Gehäusewandung (12) weisenden Gehäuserasthakens (20) das Gehäuse (2) an der Montageplatte (6) arretiert.

2. Elektroinstallationsgerät (1) nach Anspruch 1,
**dadurch gekennzeichnet, dass**
die Montageplatte (6) zumindest zwei der Rastarme (16), welche insbesondere um 180° um einen Umfang der Montageplatte (6) angeordnet sind, aufweist, welche sich jeweils in dem montierten Zustand des Elektroinstallationsgeräts (1) in einen Spalt (22) zwischen der Gehäusewandung (12) und dem Funktionseinsatz (4) zur Arretierung des Funktionseinsatzes (4) und des Gehäuses (2) erstrecken.

3. Elektroinstallationsgerät (1) nach Anspruch 1 oder 2,
**dadurch gekennzeichnet, dass**
der Funktionseinsatz (4) für jeden Rastarm (16) eine gegen die Montagerichtung (M) weisende Funktionsrastfläche (24) aufweist, auf welcher in dem montierten Zustand des Elektroinstallationsgeräts (1) jeweils zumindest eine korrespondierend in die Montagerichtung (M) weisend ausgebildete Funktionsgegenrastfläche (26) des Funktionsrasthakens (18) derart aufliegt, dass die Funktionsrastfläche (24) von dem Funktionsrasthaken (18) hintergriffen ist und das Gehäuse (2) für jeden Rastarm (16) eine gegen die Montagerichtung (M) weisende Gehäuserastfläche (28) aufweist, auf welcher in dem montierten Zustand des Elektroinstallationsgeräts (1) jeweils zumindest eine korrespondierend in die Montagerichtung (M) weisend ausgebildete Gehäusegegenrastfläche (30) des Gehäuserasthakens (20) derart aufliegt, dass die Gehäuserastfläche (28) von dem Gehäuserasthaken (20) hintergriffen ist.

4. Elektroinstallationsgerät (1) nach Anspruch 3,
**dadurch gekennzeichnet, dass**
die Funktionsgegenrastfläche(n) (26) derart ausgebildet ist/sind, dass sie in die Montagerichtung (M) weisend mit ihrem jeweiligen Rastarm (16) einen Winkel (α) von mindestens 90°, insbesondere größer als 90°, einschließen und/oder die Gehäusegegenrastfläche(n) (30) derart ausgebildet ist/sind, dass sie in die Montagerichtung (M) weisend mit ihrem jeweiligen Rastarm (16) einen Winkel (β) von mindestens 90°, insbesondere größer als 90°, einschließen.

5. Elektroinstallationsgerät (1) nach Anspruch 3 oder 4,
**dadurch gekennzeichnet, dass**
die Gehäusegegenrastfläche(n) (30) derart ausgebildet ist/sind, dass sie in die Montagerichtung (M) weisend mit ihrem jeweiligen Rastarm (16) einen Winkel (β) von kleiner als 90° einschließen.

6. Elektroinstallationsgerät (1) nach einem der vorgenannten Ansprüche,
**dadurch gekennzeichnet, dass**
der zumindest eine Rastarm (16) derart ausgebildet ist, dass in dem montierten Zustand des Elektroinstallationsgeräts (1) der Rastarm (16) mit zumindest einem Anlageabschnitt (34) an der Gehäusewandung (12) des Gehäuses (2) anliegt und auf der zum Funktionseinsatz (4) weisenden Seite zwischen dem Rastarm (16) und dem Funktionseinsatz (4) ein Spalt (36) über eine Erstreckung des Rastarms (16) in Montagerichtung (M) verlaufend ausgebildet ist, wobei eine senkrecht zur Montagerichtung (M) gemessene Breite des Spalts (36) mindestens einer senkrecht zu der Montagerichtung (M) gemessenen Breite einer Überschneidungsfläche zwischen der Gehäuserastfläche (28) und der Gehäusegegenrastfläche (30) entspricht.

7. Elektroinstallationsgerät (1) nach einem der vorgenannten Ansprüche,
**dadurch gekennzeichnet, dass**
der Gehäuserasthaken (18) des zumindest einen Rastarms (16) eine in die Montagerichtung (M) weisend, zum Funktionseinsatz (4) ansteigende erste Montageschräge (18a) aufweist, insbesondere wobei die erste Montageschräge (18a) in die Funktionsgegenrastfläche (26) übergeht und/oder der Gehäuserasthaken (20) des zumindest einen Rastarms (16) zumindest eine in die Montagerichtung (M) weisend, zum Gehäuse (2) ansteigende zweite Montageschräge (20a) aufweist, insbesondere wobei die zweite Montageschräge (20a) in die Gehäusegegenrastfläche (30) übergeht.

8. Elektroinstallationsgerät (1) nach einem der Ansprüche 3 bis 7,
**dadurch gekennzeichnet, dass**
die Gehäusegegenrastfläche (30) des Gehäuserasthakens (20) des zumindest einen Rastarms (16) durch einen Freischnitt (38) senkrecht zur Montagerichtung (M) in dem jeweiligen Rastarm (16) ausgebildet ist, welcher zur Gehäusewandung (12) weisend geöffnet ist und die jeweilige Gehäuserastfläche (28) an einem zum jeweiligen Rastarm (16) weisenden Vorsprung (38a) ausgebildet ist, welcher sich in dem montierten Zustand des Elektroinstallationsgeräts (1) zumindest teilweise, insbesondere vollständig, in den Freischnitt (38) erstreckt.

9. Elektroinstallationsgerät (1) nach Anspruch 8,
**dadurch gekennzeichnet, dass**
der Gehäuserasthaken (20) und der Freischnitt (38) derart ausgebildet sind, dass eine zu der Gehäusewandung (12) weisende maximale Erstreckung des Gehäuserasthakens (20) kleiner oder gleich groß ist wie eine in Montagerichtung (M) vor dem Gehäuserasthaken (20) ausgebildete maximale zu der Gehäusewandung (12) weisende Erstreckung des Rastarm (16).

10. Elektroinstallationsgerät (1) nach einem der Ansprüche 1 bis 9,
**dadurch gekennzeichnet, dass**
zumindest der eine Rastarm (16) auf seiner zum Gehäuse (2) weisenden Seite eine in Montagerichtung (M) verlaufende Nut (50) aufweist, wobei die Nut (50) gegen die Montagerichtung (M) sowie zum Gehäuse (2) weisend geöffnet ausgebildet ist und in die Montagerichtung (M) weisend an der Montageplatte (6) endet, wobei die Nut (50) insbesondere vollständig über die in Montagerichtung (M) verlaufende Erstreckung des Rastarms (16), vorzugsweise in Montagerichtung (M), durch den Gehäuserasthaken (20) hindurch verläuft.

11. Elektroinstallationsgerät (1) nach einem der vorgenannten Ansprüche,
**dadurch gekennzeichnet, dass**
das Gehäuse (2) zumindest eine in Montagerichtung (M) weisend geöffnete Funktionsöffnung (40) aufweist, wobei die Funktionsöffnung(en) (40) derart angeordnet ist/sind, dass in dem montierten Zustand des Elektroinstallationsgerät (1) durch die Funktionsöffnung(en) (40) hindurch zumindest auf den einen Rastarm (16) zur elastischen Verformung, insbesondere mit einem Lösewerkzeug (42), eingewirkt werden kann.

12. Elektroinstallationsgerät (1) nach Anspruch 11,
**dadurch gekennzeichnet, dass**
der zumindest eine Rastarm (16) und/oder das Lösewerkzeug (42) derart ausgebildet ist, dass zur Trennung des Gehäuses (2) und des Funktionseinsatzes (4) von der Montageplatte (6) das Lösewerkzeug (42) lediglich in Montagerichtung (M) weisend in Eingriff mit dem Rastarm (16) gebracht werden muss, so dass die reine Verschiebung des Lösewerkzeugs (42) in die Montagerichtung (M) weisend ausreicht, um den Rastarm (16) derart elastisch zu verformen, dass die jeweilige Rastverbindung gelöst wird.

13. Elektroinstallationsgerät (1) nach Anspruch 11 oder 12,
**dadurch gekennzeichnet, dass**
die Funktionsöffnung(en) (40) einen umlaufenden radial nach innen vorstehenden Kragen (44) aufweist, wobei der Kragen (44) zumindest eine Durchgriffsöffnung (46) aufweist, insbesondere der Kragen (44) derart viele Durchgriffsöffnungen (46) aufweist, wie die Montageplatte (6) Rastarme (16) aufweist, wobei die Durchgriffsöffnung(en) (46) in dem montierten Zustand des Elektroinstallationsgeräts (1) in Montagerichtung (M) weisend fluchtend zu dem/den Rastarm(en) (16) angeordnet ist/sind, insbesondere in dem montierten Zustand des Elektroinstallationsgeräts (1) jeweils eine Durchgriffsöffnung (46) fluchtend zu jeweils einem der Rastarme (16) angeordnet ist.

14. Elektroinstallationsgerät (1) nach Anspruch 13,
**dadurch gekennzeichnet, dass**
die Durchgriffsöffnung(en) (46) im Kragen (44) senkrecht zur Montagerichtung (M) nach innen zur Funktionsöffnung (40) weisend geöffnet ist/sind.

15. Elektroinstallationsgerät (1) nach einem der vorgenannten Ansprüche,
**dadurch gekennzeichnet, dass**
der zumindest eine Rastarm (16) gegen die Montagerichtung (M) weisend eine Demontagelasche (48) aufweist, insbesondere sich in die Montagerichtung (M) weisend an die Demontagelasche (48) der Funktionsrasthaken 18 und der Gehäuserasthaken (20) anschließen.

16. Elektroinstallationsgerät (1) nach einem der Ansprüche 11 bis 15,
**dadurch gekennzeichnet, dass**
durch die Funktionsöffnung(en) (40) hindurch der Funktionseinsatz (4) in dem montierten Zustand des Elektroinstallationsgeräts (1) von außen zugänglich ist.

## Geänderte Patentansprüche

### Geänderte Patentansprüche gemäss Regel 137(2) EPÜ.

1. Elektroinstallationsgerät (1) zur Aufputzmontage, aufweisend ein Gehäuse (2), einen Funktionseinsatz (4) und eine, auf einer Lagerfläche anordenbare, Montageplatte (6), wobei die Montageplatte (6) eine in eine Montagerichtung (M) weisende Auflagefläche (8) zur Anlage an der Lagerfläche aufweist, wobei der Funktionseinsatz (4) und das Gehäuse (2) gegenüberliegend der Auflagefläche (8) an der Montageplatte (6) derart in Montagerichtung (M) weisend in einem montierten Zustand des Elektroinstallationsgeräts (1) montierbar sind, dass in dem montierten Zustand des Elektroinstallationsgeräts (1) das Gehäuse (2) den Funktionseinsatz (4) mit einer Gehäusewandung (12) senkrecht zur Montagerichtung (M) umgreift und das Gehäuse (2) und der Funktionseinsatz (4) gegen eine Bewegung entgegen der Montagerichtung (M) an der Montageplatte (6) arretiert sind, **dadurch gekennzeichnet, dass**
die Montageplatte (6) zumindest einen gegen die Montagerichtung (M) hervorstehenden senkrecht zur Montagerichtung (M) elastischen Rastarm (16) aufweist, welcher sich in dem montierten Zustand des Elektroinstallationsgeräts (1) zwischen der Gehäusewandung (12) und dem Funktionseinsatz (4) erstreckt und mittels zumindest eines zum Funktionseinsatz (4) weisenden Funktionsrasthakens (18) den Funktionseinsatz (4) an der Montageplatte (6) arretiert und mittels zumindest eines zur Gehäusewandung (12) weisenden Gehäuserasthakens (20) das Gehäuse (2) an der Montageplatte (6) arretiert.

2. Elektroinstallationsgerät (1) nach Anspruch 1,
**dadurch gekennzeichnet, dass**
die Montageplatte (6) zumindest zwei der Rastarme (16), welche insbesondere um 180° um einen Umfang der Montageplatte (6) angeordnet sind, aufweist, welche sich jeweils in dem montierten Zustand des Elektroinstallationsgeräts (1) in einen Spalt (22) zwischen der Gehäusewandung (12) und dem Funktionseinsatz (4) zur Arretierung des Funktionseinsatzes (4) und des Gehäuses (2) erstrecken.

3. Elektroinstallationsgerät (1) nach Anspruch 1 oder 2,
**dadurch gekennzeichnet, dass**
der Funktionseinsatz (4) für jeden Rastarm (16) eine gegen die Montagerichtung (M) weisende Funktionsrastfläche (24) aufweist, auf welcher in dem montierten Zustand des Elektroinstallationsgeräts (1) jeweils zumindest eine korrespondierend in die Montagerichtung (M) weisend ausgebildete Funktionsgegenrastfläche (26) des Funktionsrasthakens (18) derart aufliegt, dass die Funktionsrastfläche (24) von dem Funktionsrasthaken (18) hintergriffen ist und das Gehäuse (2) für jeden Rastarm (16) eine gegen die Montagerichtung (M) weisende Gehäuserastfläche (28) aufweist, auf welcher in dem montierten Zustand des Elektroinstallationsgeräts (1) jeweils zumindest eine korrespondierend in die Montagerichtung (M) weisend ausgebildete Gehäusegegenrastfläche (30) des Gehäuserasthakens (20) derart aufliegt, dass die Gehäuserastfläche (28) von dem Gehäuserasthaken (20) hintergriffen ist.

4. Elektroinstallationsgerät (1) nach Anspruch 3,
**dadurch gekennzeichnet, dass**
die Funktionsgegenrastfläche(n) (26) derart ausgebildet ist/sind, dass sie in die Montagerichtung (M) weisend mit ihrem jeweiligen Rastarm (16) einen Winkel (α) von mindestens 90°, insbesondere größer als 90°, einschließen und/oder die Gehäusegegenrastfläche(n) (30) derart ausgebildet ist/sind, dass sie in die Montagerichtung (M) weisend mit ihrem jeweiligen Rastarm (16) einen Winkel (β) von mindestens 90°, insbesondere größer als 90°, einschließen.

5. Elektroinstallationsgerät (1) nach Anspruch 3 oder 4,
**dadurch gekennzeichnet, dass**
die Gehäusegegenrastfläche(n) (30) derart ausgebildet ist/sind, dass sie in die Montagerichtung (M) weisend mit ihrem jeweiligen Rastarm (16) einen Winkel (β) von kleiner als 90° einschließen.

6. Elektroinstallationsgerät (1) nach einem der vorgenannten Ansprüche, **dadurch gekennzeichnet, dass**
der zumindest eine Rastarm (16) derart ausgebildet ist, dass in dem montierten Zustand des Elektroinstallationsgeräts (1) der Rastarm (16) mit zumindest einem Anlageabschnitt (34) an der Gehäusewandung (12) des Gehäuses (2) anliegt und auf der zum Funktionseinsatz (4) weisenden Seite zwischen dem Rastarm (16) und dem Funktionseinsatz (4) ein Spalt (36) über eine Erstreckung des Rastarms (16) in Montagerichtung (M) verlaufend ausgebildet ist, wobei eine senkrecht zur Montagerichtung (M) gemessene Breite des Spalts (36) mindestens einer senkrecht zu der Montagerichtung (M) gemessenen Breite einer Überschneidungsfläche zwischen der Gehäuserastfläche (28) und der Gehäusegegenrastfläche (30) entspricht.

7. Elektroinstallationsgerät (1) nach einem der vorgenannten Ansprüche, **dadurch gekennzeichnet, dass**
der Funktionsrasthaken (18) des zumindest einen Rastarms (16) eine in die Montagerichtung (M) weisend, zum Funktionseinsatz (4) ansteigende erste Montageschräge (18a) aufweist, insbesondere wobei die erste Montageschräge (18a) in die Funktionsgegenrastfläche (26) übergeht und/oder der Gehäuserasthaken (20) des zumindest einen Rastarms (16) zumindest eine in die Montagerichtung (M) weisend, zum Gehäuse (2) ansteigende zweite Montageschräge (20a) aufweist, insbesondere wobei die zweite Montageschräge (20a) in die Gehäusegegenrastfläche (30) übergeht.

8. Elektroinstallationsgerät (1) nach einem der Ansprüche 3 bis 7,
**dadurch gekennzeichnet, dass**
die Gehäusegegenrastfläche (30) des Gehäuserasthakens (20) des zumindest einen Rastarms (16) durch einen Freischnitt (38) senkrecht zur Montagerichtung (M) in dem jeweiligen Rastarm (16) ausgebildet ist, welcher zur Gehäusewandung (12) weisend geöffnet ist und die jeweilige Gehäuserastfläche (28) an einem zum jeweiligen Rastarm (16) weisenden Vorsprung (38a) ausgebildet ist, welcher sich in dem montierten Zustand des Elektroinstallationsgeräts (1) zumindest teilweise, insbesondere vollständig, in den Freischnitt (38) erstreckt.

9. Elektroinstallationsgerät (1) nach Anspruch 8,
**dadurch gekennzeichnet, dass**
der Gehäuserasthaken (20) und der Freischnitt (38) derart ausgebildet sind, dass eine zu der Gehäusewandung (12) weisende maximale Erstreckung des Gehäuserasthakens (20) kleiner oder gleich groß ist wie eine in Montagerichtung (M) vor dem Gehäuserasthaken (20) ausgebildete maximale zu der Gehäusewandung (12) weisende Erstreckung des Rastarm (16).

10. Elektroinstallationsgerät (1) nach einem der Ansprüche 1 bis 9,
**dadurch gekennzeichnet, dass**
zumindest der eine Rastarm (16) auf seiner zum Gehäuse (2) weisenden Seite eine in Montagerichtung (M) verlaufende Nut (50) aufweist, wobei die Nut (50) gegen die Montagerichtung (M) sowie zum Gehäuse (2) weisend geöffnet ausgebildet ist und in die Montagerichtung (M) weisend an der Montageplatte (6) endet, wobei die Nut (50) insbesondere vollständig über die in Montagerichtung (M) verlaufende Erstreckung des Rastarms (16), vorzugsweise in Montagerichtung (M), durch den Gehäuserasthaken (20) hindurch verläuft.

11. Elektroinstallationsgerät (1) nach einem der vorgenannten Ansprüche,
**dadurch gekennzeichnet, dass**
das Gehäuse (2) zumindest eine in Montagerichtung (M) weisend geöffnete Funktionsöffnung (40) aufweist, wobei die Funktionsöffnung(en) (40) derart angeordnet ist/sind, dass in dem montierten Zustand des Elektroinstallationsgerät (1) durch die Funktionsöffnung(en) (40) hindurch zumindest auf den einen Rastarm (16) zur elastischen Verformung, insbesondere mit einem Lösewerkzeug (42), eingewirkt werden kann.

12. Kombination aus einem Elektroinstallationsgerät (1) nach Anspruch 11 mit einem Lösewerkzeug (42),
**dadurch gekennzeichnet, dass**
der zumindest eine Rastarm (16) und/oder das Lösewerkzeug (42) derart ausgebildet ist, dass zur Trennung des Gehäuses (2) und des Funktionseinsatzes (4) von der Montageplatte (6) das Lösewerkzeug (42) lediglich in Montagerichtung (M) weisend in Eingriff mit dem Rastarm (16) gebracht werden muss, so dass die reine Verschiebung des Lösewerkzeugs (42) in die Montagerichtung (M) weisend ausreicht, um den Rastarm (16) derart elastisch zu verformen, dass die jeweilige Rastverbindung gelöst wird.

13. Elektroinstallationsgerät (1) nach Anspruch 11 oder Kombination nach Anspruch 12,
**dadurch gekennzeichnet, dass**
die Funktionsöffnung(en) (40) einen umlaufenden radial nach innen vorstehenden Kragen (44) aufweist, wobei der Kragen (44) zumindest eine Durchgriffsöffnung (46) aufweist, insbesondere der Kragen (44) derart viele Durchgriffsöffnungen (46) aufweist, wie die Montageplatte (6) Rastarme (16) aufweist, wobei die Durchgriffsöffnung(en) (46) in dem montierten Zustand des Elektroinstallationsgeräts (1) in Montagerichtung (M) weisend fluchtend zu dem/den Rastarm(en) (16) angeordnet ist/sind, insbesondere in dem montierten Zustand des Elektroinstallationsgeräts (1) jeweils eine Durchgriffsöffnung (46) fluchtend zu jeweils einem der Rastarme (16) angeordnet ist.

14. Elektroinstallationsgerät (1) oder Kombination nach Anspruch 13,
**dadurch gekennzeichnet, dass**
die Durchgriffsöffnung(en) (46) im Kragen (44) senkrecht zur Montagerichtung (M) nach innen zur Funktionsöffnung (40) weisend geöffnet ist/sind.

15. Elektroinstallationsgerät (1) nach einem der Ansprüche 1 bis 11, 13 oder 14, oder Kombination nach einem der Ansprüche 12 bis 14,
**dadurch gekennzeichnet, dass**
der zumindest eine Rastarm (16) gegen die Montagerichtung (M) weisend eine Demontagelasche (48) aufweist, insbesondere sich in die Montagerichtung (M) weisend an die Demontagelasche (48) der Funktionsrasthaken (18) und der Gehäuserasthaken (20) anschließen.

16. Elektroinstallationsgerät (1) nach einem der Ansprüche 11 bis 15 oder Kombination nach einem der Ansprüche 12 bis 15,
**dadurch gekennzeichnet, dass**
durch die Funktionsöffnung(en) (40) hindurch der Funktionseinsatz (4) in dem montierten Zustand des Elektroinstallationsgeräts (1) von außen zugänglich ist.
